# EUROPÄISCHE PATENTSCHRIFT

(11) **EP 2 625 019 B1**
(45) Veröffentlichungstag und Bekanntmachung des Hinweises auf die Patenterteilung: **23.03.2016**
(21) Anmeldenummer: 11770700.0
(22) Anmeldetag: 10.10.2011
(51) Int. Cl.: B29C 45/73, B29C 45/72, B29C 45/04

(54) **SPRITZGIESSMASCHINE**
INJECTION MOLDING MACHINE
MACHINE DE MOULAGE PAR INJECTION

(30) Priorität: 08.10.2010 DE 102010048000
(43) Veröffentlichungstag der Anmeldung: 14.08.2013
(73) Patentinhaber: Otto Männer Innovation GmbH, 79353 Bahlingen (DE)
(72) Erfinder: MÄNNER, Hans-Peter, 79100 Freiburg (DE)
(74) Vertreter: Prüfer & Partner mbB Patentanwälte · Rechtsanwälte
(86) Internationale Anmeldenummer: PCT/EP2011/005057
(87) Internationale Veröffentlichungsnummer: WO 2012/045479

(56) Entgegenhaltungen:
- EP-A1- 0 536 883
- DE-A1- 2 457 288
- DE-A1- 2 723 071
- US-A1- 2008 044 511
- DATABASE WPI Week 199419 Thomson Scientific, London, GB; AN 1994-157886 XP002667491, -& SU 1 799 327 A3 (TOTOS SMALL ENTERPRISE) 28. Februar 1993 (1993-02-28)

## Beschreibung

Die Erfindung betrifft eine Spritzgießmaschine zum Herstellen von Spritzlingen, mit einer Spritzstation, in der Schmelze in eine dem Spritzling entsprechende Kavität eines Formwerkzeugs einbringbar ist, das zumindest ein erstes Werkzeugteil und ein zweites Werkzeugteil aufweist, welche in eine Offen- und eine Schließstellung bringbar sind, wobei das erste Werkzeugteil wenigstens einen Angusskanal und die Kavität zumindest teilweise in dem zweiten Werkzeugteil angeordnet ist, mit einer Kühlstation, einer Entnahmestation zur Entnahme der Spritzlinge sowie einer Transporteinrichtung, die wenigstens eine die Stationen verbindende Transportstrecke aufweist, auf welcher das zweite Werkzeugteil gegebenenfalls mit einem Spritzling in der Kavität von einer Station zu einer anderen Station bewegbar sind. Ferner betrifft die Erfindung ein Werkzeugteil für die kalte Seite eines Formwerkzeugs einer Spritzgießmaschine, welches Werkzeugteil entlang einer Führung von einer Spritzstation, an der das Werkzeugteil zum Begrenzen einer Kavität mit einem dazu passenden, stationären Werkzeugteil für die warme Seite des Formwerkzeugs verbindbar ist, zu mindestens einer von der Spritzstation beabstandeten Kühlstation transportierbar ist, wobei das Werkzeugteil für die kalte Seite folgendes aufweist:
- einen Hauptkörper aus einem ersten Werkstoff,
- ein Formnest aus einem zweiten Werkstoff,
- eine Formhöhlungsabschnitt mit einer Kavität zum Formen eines Spritzlings an der Spritzstation,
- einen Wärmeableitbereich aus einem gut wärmeleitfähigen dritten Werkstoff, welcher Wärmeableitbereich dazu geeignet ist, mit der Kühlstation zusammen zu wirken, wobei der Wärmeableitbereich eine in Gebrauchsstellung der Kühlstation zugewandte Oberfläche aufweist, die dazu geeignet ist, bei direktem thermischen Kontakt mit einem Kühlbereich der Kühlstation Wärme vom Formnest und dem Formhöhlungsabschnitt zu dem Kühlbereich abzuleiten,
- ein Verbindungsteil, welches mit einem dazu passenden Verbindungsteil der Spritzstation lösbar verbindbar ist, um das Werkzeugteil für die kalte Seite mit dem Werkzeugteil für die warme Seite lösbar zu verbinden, derart, dass das den Spritzling enthaltende Werkzeugteil für die kalte Seite zu der Kühlstation transportierbar ist, und
- einen Positionierabschnitt, mittels dem das Werkzeugteil für die kalte Seite relativ zu der Spritzstation und der Kühlstation positionierbar ist.

Eine ähnliche Spritzgießmaschine ist in der deutschen Offenlegungsschrift DE 27 23 071 A1 beschrieben. Die Spritzgießmaschine weist eine zweiteilige Gießform auf. Die Spritzform wird von einer feststehenden Formträgerplatte und die Schließform von einer von dieser abhebbaren schließseitigen Formträgerplatte getragen. Der spritzseitigen Formträgerplatte sind sich auf gleicher Höhe wie die Spritzform befindende Kühleinrichtungen zugeordnet. Nach dem Abheben von der spritzseitigen Formträgerplatte ist die schließseitige Formträgerplatte in der Art verschiebbar, dass die Schließformen gleichzeitig jeweils einer der beiden Kühleinrichtungen und der Spritzform gegenüberstehen. Damit kann nach Beendigung des Spritzvorganges und nach Abkühlen der äußersten Kontur des Spritzlings durch Abheben der Formträgerplatten voneinander die Gießform geöffnet und die Schließform mit dem in ihr verbleibenden Spritzling unter eine Kühleinrichtung und die zweite auf der schließseitigen Formträgerplatte angeordneten Schließform unter die Spritzform verschoben werden. Nach dem Schließen der Gießform kann dann ein neuer Spritzling gespritzt und gleichzeitig der erste gekühlt werden.

Eine weitere derartige Spritzgießmaschine ist aus US 3 973 981 bekannt. Sie weist mehrere Formwerkzeuge auf, die jeweils drei übereinander stapelbare Werkzeugteile haben, die eine der Form eines herzustellenden Spritzlings entsprechende Kavität umgrenzen. Die Werkzeugteile jedes Formwerkzeugs sind jeweils mittels einer Klemmvorrichtung miteinander verspannbar. Die Spritzgießmaschine hat eine Trennungs-/Zusämmensetzeinrichtung, mittels welcher die Formwerkzeuge zum Entnehmen der Spritzlinge voneinander getrennt und danach zum Herstellen eines weiteren Spritzlings wieder zusammensetzbar sind. Mittels einer Transporteinrichtung werden die einzelnen Werkzeugteile zunächst der Trennungs-/Zusammensetzeinrichtung zugeführt, um sie dort zu einem Formwerkzeug zusammenzusetzen und mit der Klemmvorrichtung zu verspannen. Danach wir das so erhaltene Formwerkzeug mit Hilfe der Transporteinrichtung einer Spritzstation zugeführt, an der Schmelze in die Kavität eingebracht wird. Dabei hält die Klemmvorrichtung die Werkzeugteile des Formwerkzeugs zusammen. Anschließend wird das Formwerkzeug zusammen mit dem in der Kavität befindlichen Schmelze zu einer Kühlstation weitertransportiert, in der die Schmelze erstarrt. Danach wir das Formwerkzeug erneut zu der Trennungs-/Zusammensetzeinrichtung, um die Werkzeugteile voneinander zu trennen, den Spritzling aus der Kavität zu entnehmen und den Anguss vom Spritzling zu entfernen. Bei Bedarf können die vorstehend genannten Schritte zum Herstellen mindestens eines weiteren Spritzlings wiederholt werden. Die Spritzgießmaschine hat den Nachteil, dass das Abkühlen des Formwerkzeugs in der Kühlstation relativ zeitaufwändig ist. Ungünstig ist außerdem, dass das Formwerkzeug nach dem Zusammensetzen der Werkzeugteile wieder aufgewärmt werden muss. Die Spritzgießmaschine weist deshalb eine entsprechend lange Zykluszeit auf. Außerdem wird für den Betrieb der Spritzgießmaschine relativ viel Energie benötigt.

Es besteht deshalb die Aufgabe, eine Spritzgießmaschine der eingangs genannten Art zu schaffen, die platzsparend ist und eine geringe Zykluszeit ermöglicht. Ferner besteht die Aufgabe, ein Werkzeugteil für die kalte Seite eines Formwerkzeugs einer solchen Spritzgießmaschine anzugeben.

Diese Aufgabe wird durch eine Spritzgießmaschine nach Anspruch 1 gelöst.

Das erste Werkzeugteil ist ortsfest an einer Maschinendüse angeordnet und das zweite Werkzeugteil ist getrennt von dem ersten Werkzeugteil entlang der Transportstrecke bewegbar, wobei das erste Werkzeugteil einen aus einem gut wärmeleitfähigen Werkstoff bestehenden Wärmeableitbereich aufweist, und der Wärmeableitbereich thermisch mit einem Kühlbereich der Kühlstation in Kontakt bringbar ist, derart, dass der Kühlbereich von dem Spritzling beabstandet ist.

In vorteilhafter Weise ist es dadurch möglich, nach Beendigung des Spritzgießpozesses noch bevor die Schmelze vollständig erstarrt ist, das Formwerkzeug zu öffnen und dann nur das zweite Werkzeugteil zusammen mit dem darin befindlichen Spritzling zu der Kühlstation zu transportieren. An der Kühlstation wird der Wärmeableitbereich des zweiten Werkzeugteils thermisch mit dem Kühlbereich der Kühlstation in Kontakt gebracht, um das zweite Werkzeugteil und den darin befindlichen Spritzling zu kühlen. Da der Spritzling zu Beginn des Kühlvorgangs noch relativ weich und verformbar ist, wird ein direkter Kontakt zwischen der Kühlstation bzw. dem Kühlbereich und dem Spritzling vermieden. Das erste Werkzeugteil verbleibt an der Maschinendüse und wird nicht gekühlt. Die erfindungsgemäße Spritzgießmaschine ermöglicht es, den Spritzling schnell abzukühlen, so dass er danach aus dem zweiten Werkzeugteil entfernt werden kann. Da nur das zweite Werkzeugteil des Formwerkzeugs abgekühlt wird, ermöglicht die Spritzgießmaschine einen energiesparenden Betrieb. Die Spritzgießmaschine ist außerdem platzsparend.

Dadurch, dass die Transporteinrichtung eine die Stationen verbindende Transportstrecke aufweist, auf welcher die Spritzlinge von der einen Station zu der anderen Station bewegbar sind, lassen sich gleichzeitig mehrere Spritzlinge transportieren. So kann beispielsweise ein Spritzling von der Spritzstation zu einer Kühlstation transportiert werden und gleichzeitig ein Spritzling von der Kühlstation zu einer Entformstation transportiert werden.

Bei einer bevorzugten Ausgestaltung der Erfindung weist der Kühlbereich einen auf den Wärmeableitbereich zu- und von diesem weg bewegbaren Kühlkörper auf, der zum direkten Kühlen des zweiten Werkzeugteils thermisch mit dem Wärmeableitbereich in Kontakt bringbar ist. Dabei kann der Kühlkörper den Wärmeableitbereich flächig kontaktieren, so dass das zweite Werkzeugteil mit dem darin befindlichen Spritzling entsprechend schnell abgekühlt werden kann. Der Kühlkörper ist bevorzugt als Kühlplatte ausgestaltet.

Vorteilhaft ist, wenn dass als weitere Station eine Heizstation an der Transportstrecke angeordnet ist. Die Heizstation ist dabei in Transportrichtung hinter der Kühlstation angeordnet, so dass das zweite Werkzeugteil vorgeheizt werden kann, bevor es an der Spritzstation positioniert wird. Eine Erwärmung des zweiten Werkteils hat den Vorteil, dass in die Kavität eingespritzte Schmelze während des Spritzvorgangs nur sehr langsam erkaltet. Hierdurch lassen sich sehr feingliedrige Spritzlinge herstellen. Denn je langsamer die Schmelze während des Sprizugießens erkaltet, desto besser lässt sich der Spritzling ausformen. In der als Heizstation ausgebildeten weiteren Station kann das betreffende Werkzeug beziehungsweise das betreffende zweite Werkzeugteil in zwei Stufen mittels Induktion erwärmt werden. Hierzu braucht das Werkzeugteil lediglich vor dem Induktor angeordnet zu werden und die Induktion gestartet zu werden. Weitere Elemente sind im Wesentlichen nicht mehr erforderlich. Dadurch, dass das Werkzeugteil in zwei Stufen erwärmt wird, kann es in der ersten Stufe vorgewärmt und in der zweiten Stufe auf ihre gewünschte Endtemperatur erwärmt werden. Hierdurch kann die Erwärmung der Werkzeugteile auf ihre Endtemperatur innerhalb einer deutlich verkürzten Taktzeit erfolgen.

Zweckmäßigerweise ist der dass der Kühlkörper aktiv gekühlt. Dadurch kann das zweite Werkzeugteil noch schneller abgekühlt werden. Außerdem kann der Kühlkörper entsprechend kompakte Abmessungen haben.

Bei einer bevorzugten Ausführungsform der Erfindung weist der Kühlkörper mindestens einen Kühlmittelkanal auf, der von einem Kühlfluid durchströmbar ist. Dabei kommt als Kühlfluid bevorzugt Wasser zum Einsatz. In vorteilhafter Weise kann die Kühlung der Werkzeughälfte dadurch erfolgen, dass eine Wassergekühlte Aluminiumplatte mittels eines Pneumatikzylinders an die Oberfläche der Werkzeughälfte gepresst wird. Hierdurch entsteht eine Kontaktkühlung.

Bei einer zweckmäßigen Ausgestaltung der Erfindung ist der Kühlkörper quer zur Transportrichtung des Werkzeugteils auf dieses zu- und von diesem weg bewegbar. Die Spritzgießmaschine ermöglicht dadurch einen einfachen Aufbau.

Mit Vorteil weist die Spritzgießmaschine eine Anpressvorrichtung auf, mittels welcher der Kühlkörper flächig an das zweite Werkzeugteil anpressbar ist. Die Wärme kann dadurch noch schneller von dem zweiten Werkzeugteil in den Kühlbereich der Kühlstation abgeleitet werden.

Bei einer anderen vorteilhaften Ausgestaltung der Erfindung weist die Kühlstation im Kühlbereich mindestens eine Gasauslassöffnung auf, aus der ein Kühlgas direkt auf den Wärmeableitbereich ausströmbar ist. Der Wärmeableitbereich kann dadurch gekühlt werden, ohne die Kühlstation berühren zu müssen. Zur Vermeidung einer Deformation des Spritzlings sind die Gasauslassöffnungen dabei so ausgestaltet, dass ein direktes Anblasen des Spritzlings mit dem Kühlgas vermieden wird.

Bildet die Transportstrecke einen geschlossenen Umlauf, wie dies bei einer besonderen Ausführungsform der Erfindung vorgesehen ist, so kann des Weiteren das in der Heizstation vorgeheizte Werkzeug wieder zu der Spritzstation transportiert werden. Durch den gleichzeitigen Transport des Werkzeugs zwischen den Stationen verringert sich die Zykluszeit der Spritzgießmaschine deutlich. Sie wird lediglich durch die längste Verweildauer des Werkzeugs in einer Station begrenzt.

Gemäß der Erfindung weist die Transportstrecke Linearförderer auf, welche an ihren Enden jeweils um 90 Grad gedreht miteinander verbunden sind. Die Verbindung der Linearförderer an ihren Enden erfolgt in vorteilhafter Weise mittels Drehantrieben.

Dadurch, dass die Transportstrecke aus Linearförderern besteht, welche einen geschlossenen Umlauf bilden, lassen sich die wesentlichen Teile der Spritzgießmaschine innerhalb der Transportstrecke anordnen. Dies wirkt sich sehr vorteilhaft auf den Platzbedarf der Spritzgießmaschine aus.

Mittels der erfindungsgemäßen Spritzgießmaschine lässt sich ein Spritzling in folgender Weise herstellen: Eine in der Spritzstation befindliches Formwerkzeug wird geschlossen. Dann wird Schmelze in die Kavität des Formwerkzeugs gespritzt. Anschließend wird das Formwerkzeug geöffnet. Hierdurch ist der eigentliche Spritzgießvorgang beendet.

Gleichzeitig zum Spritzgießvorgang kann in einer Kühlstation, welche außerhalb der Spritzstation angeordnet ist, ein sich in der Kühlstation befindlicher Spritzling beziehungsweise das entsprechende zweite Werkzeugteil gekühlt werden. Ebenfalls gleichzeitig zum Spritzgießvorgang kann ein sich in einer ebenfalls außerhalb der Spritzstation angeordneten Station befindlicher Spritzling vom Anguss befreit und der Anguss ausgestoßen werden. Des Weiteren kann gleichzeitig zum Spritzgießvorgang in einer ebenfalls außerhalb der Spritzgießstation angeordneten Station ein Spritzling aus dem sich in der betreffenden Station befindlichen Werkzeugteil ausgestoßen werden. Schließlich kann gleichzeitig zum Spritzgießvorgang ein sich in einer Heizstation befindliches Werkzeugteil erwärmt werden.

Nach Beendigung des Spritzgießvorgangs kann der Spritzling beziehungsweise das zweite Werkzeugteil, in dem sich der Spritzling befindet, während eines Transportschritts von der Spritzstation zur Kühlstation transportiert werden. Während des Transportschritts kann gleichzeitig das sich in der Kühlstation befindliche Werkzeugteil von der Kühlstation zu der Station transportiert werden, in der der Spritzling vom Anguss befreit wird. Des Weiteren kann während des Transportschritts gleichzeitig das sich in der Station, in der der Spritzling vom Anguss befreit wird, befindliche zweite Werkzeugteil von dieser Station zu der Station transportiert werden, in der der Spritzling aus dem zweiten Werkzeugteil ausgestoßen wird. Darüber hinaus kann während des Transportschrittes gleichzeitig das Werkzeugteil, das sich in der Station befindet, in welcher der Spritzling ausgestoßen wird, von dieser Station zur Heizstation transportiert werden. Schließlich kann während des Transportschritts gleichzeitig das Werkzeugteil, das sich in der Heizstation befindet, von der Heizstation zur Spritzstation transportiert werden.

Während des Transportschrittes kann somit gleichzeitig der Transport aller betreffenden zweiten Werkzeugteile von einer Station zur nächsten Station stattfinden. Somit kann bei der erfindungsgemäßen Spritzgießmaschine nicht nur eine im Wesentlichen gleichzeitige Durchführung der unterschiedlichen Teilprozesse zur Herstellung eines Spritzlings stattfinden sondern auch noch der Transport des Spritzlings zu den verschiedenen Bearbeitungsstationen. Dies wirkt sich sehr vorteilhaft auf Zykluszeit der Spritzgießmaschine aus.

Dadurch, dass eine Kühlstation vorhanden ist, wird die Zeit, die erforderlich ist, dass der Spritzling soweit erkaltet, dass er entformt werden kann, stark reduziert. Dies macht sich insbesondere dann bemerkbar, wenn der Spritzlinge und/oder der Anguss voluminös ausgebildet sind.

In einer weiteren besonderen Ausführungsform der Erfindung ist vorgesehen, dass die Spritzstation ein Zentrierelement zum Zentrieren dem in die Spritzstation eingeführten zweiten Werkzeugteil aufweist. Hierdurch wird in vorteilhafter Weise erreicht, dass das zweite Werkzeugteil mittels der Transporteinrichtung nicht sehr genau positioniert zu werden braucht. Die Transporteinrichtung kann daher entsprechend einfach und damit kostengünstig aufgebaut sein.

Das Werkzeugteil für die kalte Seite eines Formwerkzeugs der Spritzgießmaschine, welches Werkzeugteil entlang einer Führung von einer Spritzstation, an der das Werkzeugteil zum Begrenzen einer Kavität mit einem dazu passenden, stationären Werkzeugteil für die warme Seite des Formwerkzeugs verbindbar ist, und zu mindestens einer von der Spritzstation beabstandeten Kühlstation transportierbar ist, weist folgendes auf:
- einen Hauptkörper aus einem ersten Werkstoff,
- ein Formnest aus einem zweiten Werkstoff,
- eine Formhöhlungsabschnitt mit einer Kavität zum Formen eines Spritzlings an der Spritzstation,
- einen Wärmeableitbereich aus einem gut wärmeleitfähigen dritten Werkstoff, welcher Wärmeableitbereich dazu geeignet ist, mit der Kühlstation zusammen zu wirken, wobei der Wärmeableitbereich eine in Gebrauchsstellung der Kühlstation zugewandte Oberfläche aufweist, die dazu geeignet ist, bei direktem thermischen Kontakt mit einem Kühlbereich der Kühlstation Wärme vom Formnest und dem Formhöhlungsabschnitt zu dem Kühlbereich abzuleiten, wobei der Wärmeableitbereich thermisch mit einem Kühlbereich der Kühlstation in Kontakt bringbar ist, derart, dass der Kühlbereich von dem Spritzling beabstandet ist,
- ein Verbindungsteil, welches mit einem dazu passenden Verbindungsteil der Spritzstation lösbar verbindbar ist, um das Werkzeugteil für die kalte Seite mit dem Werkzeugteil für die warme Seite lösbar zu verbinden, derart, dass das den Spritzling enthaltende Werkzeugteil für die kalte Seite zu der Kühlstation transportierbar ist, und
- einen Positionierabschnitt, mittels dem das Werkzeugteil für die kalte Seite relativ zu der Spritzstation und der Kühlstation positionierbar ist.

Das Werkzeugteil für die kalte Seite kann dann zusammen mit dem darin befindlichen Spritzling zu der Kühlstation transportiert werden, um den Wärmeableitbereich des Werkzeugteils thermisch mit dem Kühlbereich der Kühlstation in Kontakt zu bringen. In vorteilhafter Weise ist es dadurch möglich, dass das Werkzeugteil für die kalte Seite nicht ständig an Kühlmediumleitungen oder elektrischen Versorgungsleitungen angeschlossen sein muss. Somit kann das Werkzeugteil für die kalte Seite auf einfache Weise von der Spritzstation zur Kühlstation und ggf. zu mindestens einer weiteren Station transportiert werden.

Bei einer kostengünstigen Ausgestaltung der Erfindung ist der zweite Werkstoff der gleiche ist wie der erste Werkstoff.

Der erste Werkstoff ist vorzugsweise hoch wärmebeständig und kann insbesondere aus Kupfer, einer Kupferlegierung, Aluminium, einer Aluminiumlegierung und/oder Keramik bestehen. Dadurch wird eine schnelle Abkühlung des zweiten Werzeugteils an der Kühlstation ermölgicht.

Bei einer kostengünstigen Ausgestaltung der Erfindung ist das Verbindungsteil ein mechanisches Verbindungsteil. In diesem Fall kann das Verbindungsteil beispielsweise eine oder mehrere Spannschrauben oder dergleichen Spann- oder Klemmelemente aufweisen.

Es ist aber auch denkbar, dass das Verbindungsteil mindestens einen Permanentmagnet und/oder Elektromagnet aufweist oder derart ausgestaltet ist, dass es mit einem solchen magnetisch zusammenwirken kann.

Bei einer anderen Ausgestaltung der Erfindung weist das Verbindungsteil Mittel zum Erzeugen eines Unterdrucks auf. Die Mittel können beispielsweise Hohlräume, insbesondere in einem Arbeitszylinder aufweisen, die mit einer Unterdruckpumpe verbunden sind.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt:
- Fig. 1: eine schematische Darstellung einer erfindungsgemäßen Spritzgießmaschine in der Draufsicht,
- Fig. 2: einen die Zentrierfunktion der Spritzstation betreffenden vergrößerten Ausschnitt aus Figur 1 in einem ersten Zustand in der durch einen Pfeil X dargestellten Ansicht,
- Fig. 3: den in Figur 2 dargestellten vergrößerten Ausschnitt in einem zweiten Zustand in der durch den Pfeil X dargestellten Ansicht,
- Fig. 4: einen Schnitt entlang der Schnittlinien A-A in Figur 3, in der durch einen Pfeil Y dargestellten Ansicht,
- Fig. 5: die Transporteinrichtung betreffende Elemente der in Figur 1 dargestellten Spritzgießmaschine in der durch den Pfeil X dargestellten Ansicht,
- Fig. 6: eine Aufsicht auf ein erstes Ausführungsbeispiel eines Werkzeugteils für die kalte Seite eines Formwerkzeugs,
- Fig. 7: eine Aufsicht auf ein zweites Ausführungsbeispiel eines Werkzeugteils für die kalte Seite des Formwerkzeugs,

- Fig. 8: eine Aufsicht auf ein drittes Ausführungsbeispiel des Werkzeugteils für die kalte Seite eines Formwerkzeugs, und
- Fig. 9: einen Querschnitt durch eine an einer Kühlstation positioniertes Werkzeugteil für die kalte Seite des Formwerkzeugs, wobei die Kühlstation Gasauslassöffnungen für ein Kühlgas hat.

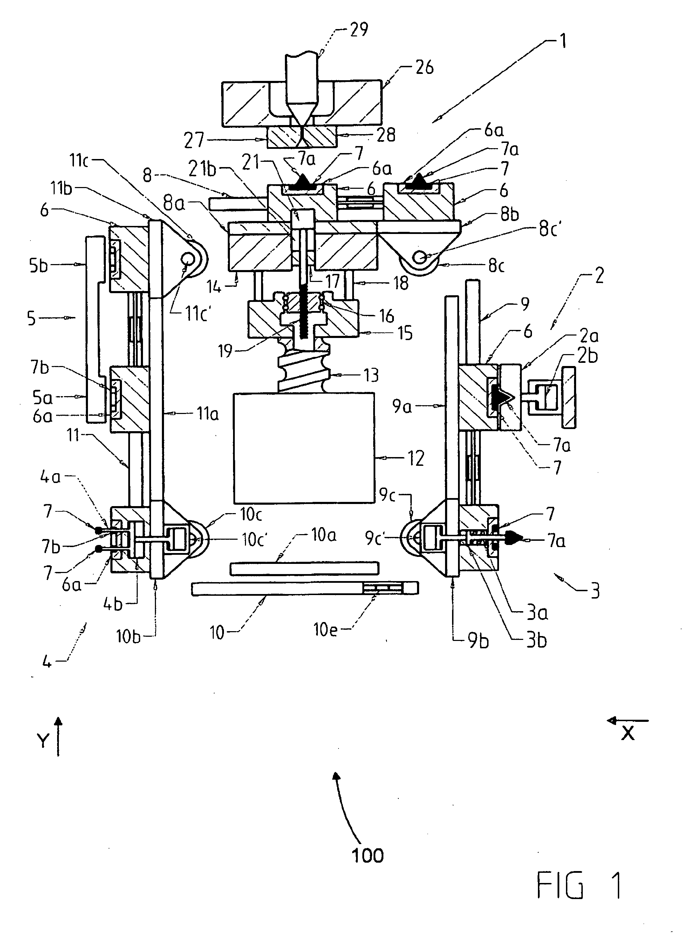

Wie Figur 1 entnommen werden kann ist in einer Spritzstation 1 einer Spritzgießmaschine 100 ein Formwerkzeug angeordnet, das ein sationäres, mit einer Maschinendüse 29 verbundenes erstes Werkzeugteil 28 und ein verstellbares zweites Werkzeigteil 6 aufweist. Die Werkzeugteile 6, 28 sind jeweils als Werkzeughälften ausgestaltet. Sie sind aufeinander zu- und voneinander wegbewegbar und in eine in Fig. 1 dargestellte Offenstellung sowie in eine Schließstellung bringbar.

Das verstellbare zweite Werkzeugteil 6 weist eine Ausnehmung auf, in der ein Formnest 6a angeordnet ist, welches eine Kavität 7b aufweist. Die Verstellung des zweiten Werkzeugteils 6 erfolgt mittels einer von einem Antrieb 12 angetriebenen Kugelgewindespindel 13. Die Kugelgewindespindel 13 verstellt eine Druckplatte 15, die über Druckbolzen 18 mit einer beweglichen Formaufspannplatte 14 verbunden ist. Auf der beweglichen Formaufspannplatte 14 ist an der den Druckbolzen 18 gegenüberliegenden Seite eine Gleitschiene 8a angeordnet, auf der das zweite Werkzeugteil 6 seitlich verschiebbar angeordnet ist.

Gegenüber dem zweiten Werkzeugteil 6 ist das nicht verstellbare erste Werkzeugteil 28 angeordnet, das auf einer ebenfalls nicht verstellbaren Formaufspannplatte 26 angeordnet ist. Das nicht verstellbare erste Werkzeugteil 28 weist einen Angusskanal 27 auf, in den mittels der Maschinendüse 29 Schmelze einbringbar ist.

Wenn das zweite Werkzeugteil 6 mittels der Kugelgewindespindel 13 auf das erste Werkzeugteil 28 gepresst wird, ist die im Formnest 6a ausgebildete Kavität 7b geschlossen. Durch den Angusskanal 27 fließende Schmelze kann dann unter Druck den gesamten Raum der Kavität 7b ausfüllen.

In Figur 1 ist rechts neben der ersten Gleitschiene 8a eine erste schwenkbare Gleitschiene 8b angeordnet, welche mittels eines Drehantriebs 8c um eine Achse 8c' um 90 Grad verschwenkbar ist. Hierdurch lässt sich die erste schwenkbare Gleitschiene 8b von der in Figur 1 dargestellten Stellung, in der sie mit der ersten Gleitschiene 8a fluchtet, in eine Stellung bringen, in der sie mit einer zweiten Gleitschiene 9a fluchtet, die in einem Winkel von etwa 90 Grad zur ersten Gleitschiene 8a angeordnet ist. Ein auf der ersten Gleitschiene 8a angeordnetes zweites Werkzeugteil 6 lässt sich somit durch Verschieben zunächst auf die erste schwenkbare Gleitschiene 8b und nach Verschwenken der ersten schwenkbaren Gleitschiene 8b auf die zweite Gleitschiene 9a transportieren.

An der zweiten Gleitschiene 9a ist eine als Kühlstation 2 ausgebildete weitere Station angeordnet. Die Kühlstation 2 weist eine wassergekühlte Aluminiumplatte 2a auf, welche über einen Pneumatikzylinder 2b auf ein sich in der Kühlstation 2 befindliches zweites Werkzeugteil 6 pressbar ist. Durch die hierdurch erzeugte Kontaktkühlung werden das verstellbare zweite Werkzeugteil 6 und insbesondere der sich in diesem zweites Werkzeugteil 6 befindliche Spritzling 7 nebst Anguss 7a gekühlt.

In Figur 1 ist unterhalb der zweiten Gleitschiene 9a eine zweite schwenkbare Gleitschiene 9b angeordnet, welche mittels eines Drehantriebs 9c um eine Achse 9c' um 90 Grad verschwenkbar ist. Hierdurch lässt sich die zweite schwenkbare Gleitschiene 9b von der in Figur 1 dargestellten Stellung, in der sie mit der zweiten Gleitschiene 9a fluchtet, in eine Stellung bringen, in der sie mit einer dritten Gleitschiene 10a fluchtet, die in einem Winkel von etwa 90 Grad zur zweiten Gleitschiene 9a angeordnet ist. Eine auf der zweiten Gleitschiene 9a angeordnetes zweites Werkzeugteil 6 lässt sich somit durch Verschieben zunächst auf die zweite schwenkbare Gleitschiene 9b und nach Verschwenken der zweiten schwenkbaren Gleitschiene 9b auf die dritte Gleitschiene 10a transportieren.

An der zweiten schwenkbaren Gleitschiene 9b ist eine als Trennstation 3 ausgestaltete weitere Station 3 angeordnet, in welcher der Anguss 7a des Spritzlings 7 von diesem abgetrennt und ausgestoßen wird. Das Ausstoßen geschieht mittels eines Stößels 3a, welcher von einem Pneumatikzylinder 3b verstellt wird.

Wie Figur 1 des Weiteren entnommen werden kann, ist links von der dritten Gleitschiene 10a eine vierte Gleitschiene 11a angeordnet, die sich in einem Winkel von etwa 90 Grad zur dritten Gleitschiene 10a erstreckt. In Figur 1 ist am unteren Ende der vierten Gleitschiene 11a eine dritte schwenkbare Gleitschiene 10b angeordnet, welche mittels eines Drehantriebs 10c um eine Achse 10c' um 90 Grad verschwenkbar ist. Hierdurch lässt sich die dritte schwenkbare Gleitschiene 10b von der in Figur 1 dargestellten Stellung, in der sie mit der vierten Gleitschiene 11 a fluchtet, in eine Stellung bringen, in der sie mit der dritten Gleitschiene 10a fluchtet. Ein auf der dritten Gleitschiene 10a angeordnetes zweites Werkzeugteil 6 lässt sich somit durch Verschieben zunächst auf die dritte schwenkbare Gleitschiene 10b und nach Verschwenken der dritten schwenkbaren Gleitschiene 10b auf die vierte Gleitschiene 11a transportieren.

An der dritten schwenkbaren Gleitschiene 10b ist als weitere Station eine Entnahmestation 4 angeordnet, in welcher die sich noch in der Kavität 7b eines sich in der Station 4 befindlichen zweiten Werkzeugteils 6 befindlichen Spritzlinge 7 aus der Kavität 7b ausgestoßen werden. Das Ausstoßen geschieht mittels Stößel 4a, welche von einem Pneumatikzylinder 4b verstellt werden.

An der vierten Gleitschiene 11 a ist eine als Heizstation 5 ausgebildete weitere Station angeordnet. Die Heizstation 5 weist einen Induktor auf, mittels dem ein sich in einem ersten Teil 5a der Heizstation 5 befindliches zweites Werkzeugteil 6 auf eine erste Temperatur vorgewärmt wird. In einem zweiten Teil 5b der Heizstation 5 wird eine sich in dem zweiten Teil 5b der Heizstation 5 befindliches zweites Werkzeugteil 6 auf seine gewünschte Endtemperatur aufgeheizt.

In Figur 1 ist oberhalb der vierten Gleitschiene 11a eine vierte schwenkbare Gleitschiene 11 b angeordnet, welche mittels eines Drehantriebs 11 c um eine Achse 11 c' um 90 Grad verschwenkbar ist. Hierdurch lässt sich die vierte schwenkbare Gleitschiene 11 b von der in Figur 1 dargestellten Stellung, in der sie mit der vierten Gleitschiene 11 a fluchtet, in eine Stellung bringen, in der sie mit der ersten Gleitschiene 8a fluchtet, die in einem Winkel von etwa 90 Grad zur vierten Gleitschiene 11a angeordnet ist. Ein auf der vierten Gleitschiene 11a angeordnetes zweites Werkzeugteil 6 lässt sich somit durch Verschieben zunächst auf die vierte schwenkbare Gleitschiene 11 b und nach Verschwenken der vierten schwenkbaren Gleitschiene 11 b auf die erste Gleitschiene 8a transportieren.

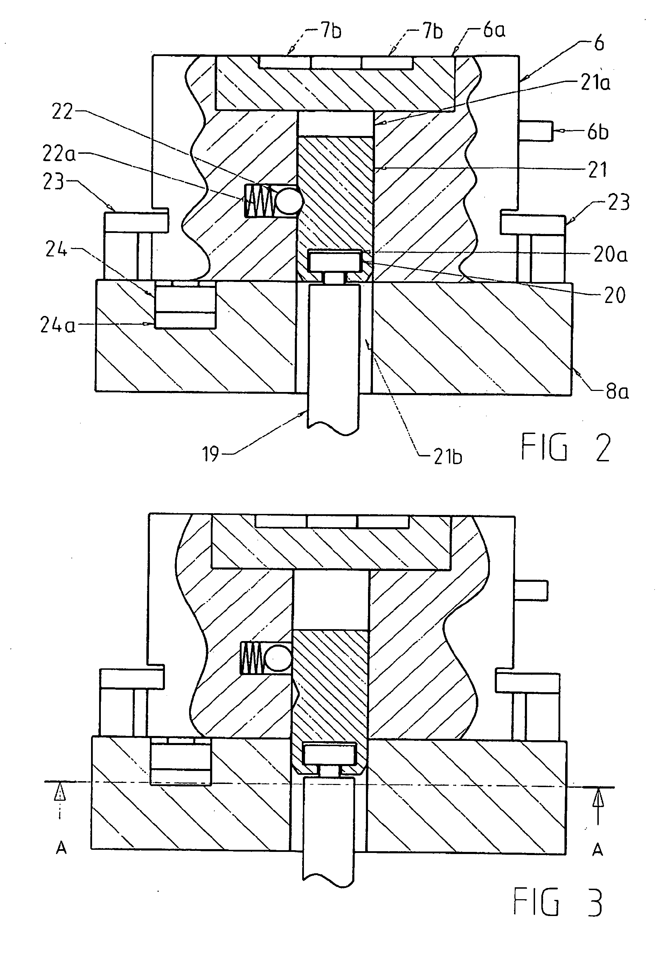

Auf der ersten Gleitschiene 8a kann dann das betreffende zweite Werkzeugteil 6 in die Spritzstation 1 transportiert werden. Wenn das zweite Werkzeugteil 6 in der Spritzstation 1 seine Position erreicht hat, wird ein in einer Öffnung 21a des zweiten Werkzeugteils 6 angeordneter Zentrierbolzen 21 in eine in der ersten Gleitschiene 8a ausgebildete Öffnung 21 b gezogen. Hierdurch ist gewährleistet, dass sich das zweite Werkzeugteil 6 in einer zur Durchführung des Spritzgießvorgangs erforderlichen exakten Position in der Spritzstation 1 befindet. Der Zentrierbolzen 21 ist an einer zweiten Kugelgewindespindel 19, welche von einem Kugellagerantrieb 16 angetrieben wird, angeordnet. Die zweite Kugelgewindespindel 19 ist mittels eines Lagers 17 in der beweglichen Formaufspannplatte 14 gelagert. Der Aufbau der Zentriervorrichtung ist in den Figuren 2 und 3 deutlicher dargestellt.

Wie Figur 2 entnommen werden kann, ist der Zentrierbolzen 21 in der Öffnung 21 a des zweiten Werkzeugteils 6 angeordnet, in der üblicherweise ein Stößel zum Auswerfen des Spritzlings angeordnet ist. Der Zentrierbolzen 21 weist eine T-nutförmige Ausnehmung 20a auf, in der ein entsprechender T-förmig ausgebildeter Kopf 20 der Kugelgewindespindel 19 angeordnet ist. Die Kugelgewindespindel 19 ist derart angeordnet, dass der Kopf 20 beim Verschieben des zweiten Werkzeugteils 6 in die T-nutförmige Ausnehmung 20a des Zentrierbolzens 21 gelangt.

Der Zentrierbolzen 21 weist des Weiteren eine an seinem Umfang ausgebildete Ausnehmung auf, in die eine Kugel 22 eingreift. Hierdurch wird der Zentrierbolzen 21 in seiner Position gehalten, wenn sich das zweite Werkzeugteil 6 nicht auf einer Gleitschiene befindet. Kugel 22 wird mittels einer von einer Feder 22a erzeugten Kraft in die Ausnehmung gedrückt.

Zur leichteren Einführung des Zentrierbolzens 21 in die Öffnung 21b der ersten Gleitschiene 8a weist der Zentrierbolzen 21 an seinem der Öffnung 21 b zugewandten Ende entsprechende Abschrägungen auf.

In Figur 3 ist der Zentrierbolzen 21 teilweise in der Öffnung 21b angeordnet. Hierdurch befindet sich das zweite Werkzeugteil 6 in einer exakten Position. Im Übrigen entspricht die Figur 3 der Figur 2. Es wurde daher auf die Bezugszeichen verzichtet.

An der ersten Gleitschiene 8a sind Führungselemente 23 angeordnet, welche in entsprechend ausgebildete Führungsnuten des zweiten Werkzeugteils 6 eingreifen. Des Weitern weist die erste Gleitschiene 8a eine Lagernut 24a auf, an deren Wandungen an dem zweiten Werkzeugteil 6 befestigte, hintereinander angeordnete Rollen 24, 25 anliegen. Durch die Rollen 24, 25 ist das zweite Werkzeugteil 6 in der ersten Gleitschiene 8a gelagert.

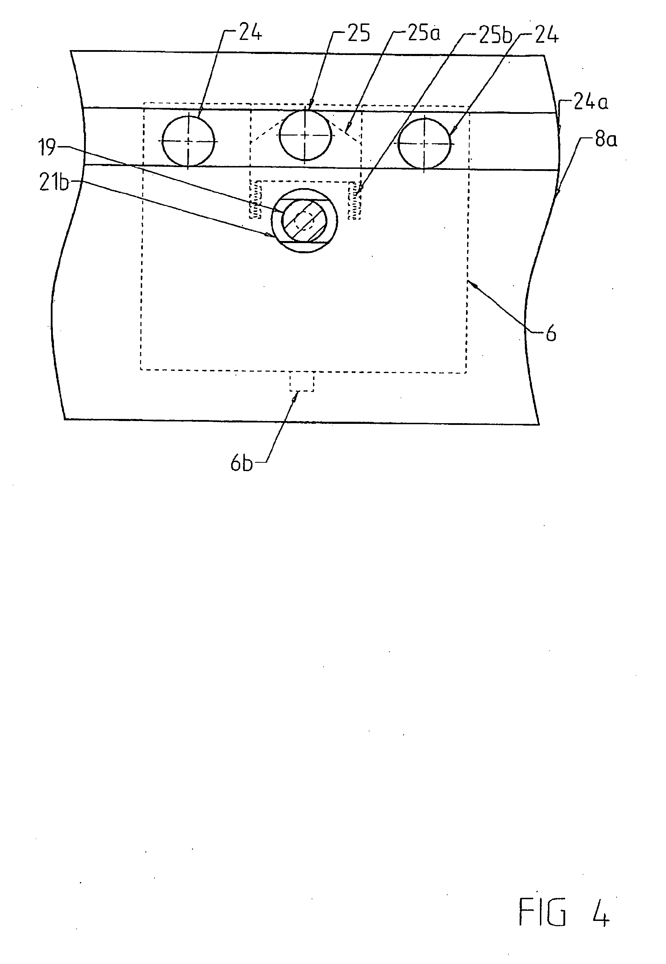

Wie insbesondere Figur 4 entnommen werden kann, ist zur Verbesserung der Lagerung die Rolle 25, die zwischen zwei äußere Rollen 24 angeordnet ist, an einem Schieber 25a befestigt, auf den die Kraft von zwei Federn 25b einwirkt. Die Federkraft ist derart, dass die mittlere Rolle 25 an die obere Wandung der Nut 24a gedrückt wird und die äußeren Rollen 24 an die untere Wandung der Nut 24a gedrückt werden.

Die übrigen Gleitschienen 8b, 9a, 9b, 10a, 10b, 11a, 11 b haben im Wesentlichen denselben Aufbau, sodass auf eine detaillierte Beschreibung dieser Gleitschienen verzichtet werden kann.

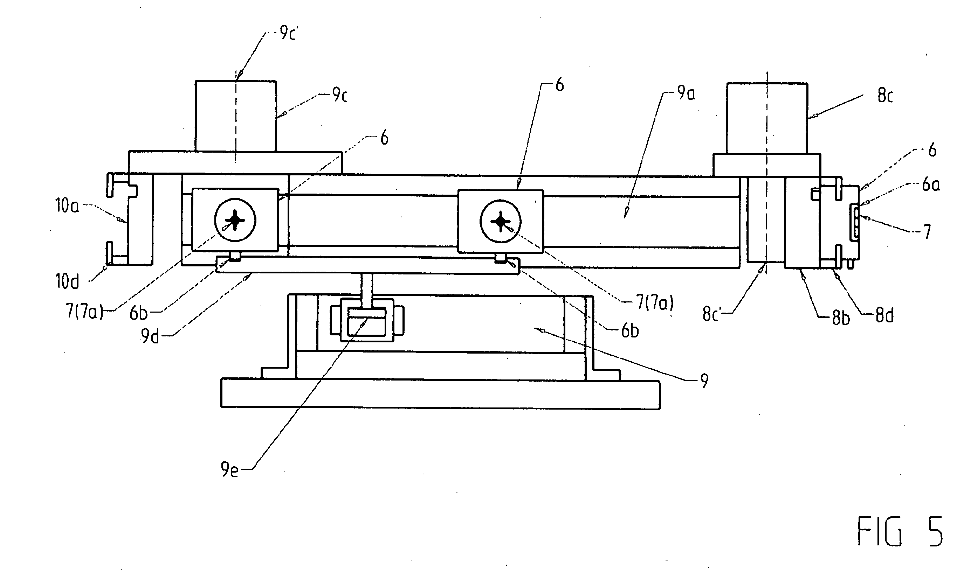

Die seitliche Verschiebung des zweiten Werkzeugteils 6 erfolgt mittels kolbenstangenloser Pneumatikzylinder 8, 9, 10, 11, wobei der erste Pneumatikzylinder 8 den Transport von auf der ersten Gleitschiene 8a angeordneten zweiten Werkzeugteilen 6 vornimmt, der zweite Pneumatikzylinder 9 den Transport von auf der zweiten Gleitschiene 9a angeordneten zweiten Werkzeugteilen 6 vornimmt, der dritte Pneumatikzylinder 10 den Transport einer auf der dritten Gleitschiene 10a angeordneten zweiten Werkzeugteilen 6 vornimmt und der vierte Pneumatikzylinder 11 den Transport von auf der vierten Gleitschiene 11a angeordneten zweiten Werkzeugteilen 6 vornimmt. Die Funktion der seitlichen Verschiebung wird beispielhaft an der in Figur 5 dargestellten Anordnung des zweiten Pneumatikzylinders 9 und der zweiten Gleitschiene 9a beschrieben.

Wie Figur 5 entnommen werden kann, ist an dem Mitnehmer des zweiten Pneumatikzylinders 9 ein Kurzhubzylinder 9e angeordnet, dessen Kolbenstange mit einer Schiene 9d verbunden ist. Die Schiene 9d weist Ausnehmungen auf, in die an den zweiten Werkzeugteilen 6 angeordnete Hervorstehungen 6b eingreifen. Befinden sich die Hervorstehungen 6b in den Ausnehmungen der Schiene 9d, lassen sich die betreffenden zweiten Werkzeugteile 6 mittels des kolbenstangenlosen zweiten Pneumatikzylinders 9 seitlich verschieben.

In der in Figur 5 dargestellten Stellung befindet sich das in der Figur 5 links angeordnete zweite Werkzeugteil 6 in der Station 3, in der der Anguss 7a ausgestoßen wird und das in Figur 5 rechts dargestellte zweite Werkzeugteil 6 in der Kühlstation 2. Aus Gründen der Übersichtlichkeit sind die Stationen 2 und 3 nicht dargestellt.

Nachdem sich die zweiten Werkzeugteile 6 in den Stationen 2 und 3 befinden, kann der Kurzhubzylinder 9e vorzugsweise während der Zeit, während die in den Stationen 2 und 3 vorzunehmenden Tätigkeiten durchgeführt werden, derart betätigt werden, dass sich die Schiene 9d absenkt, wodurch die Hervorstehungen 6b der zweiten Werkzeugteile 6 nicht mehr im Eingriff mit der Schiene 9d stehen. Daraufhin wird der zweite Pneumatikzylinder 9 derart betätigt, dass der Kurzhubzylinder 9e und damit die Schiene 9d nach rechts verstellt werden.

Zuvor oder gleichzeitig mit der Betätigung des zweiten Pneumatikzylinders 9 wird die erste schwenkbare Gleitschiene 8b, derart betätigt, dass sie mit der zweiten Gleitschiene 9a fluchtet. Hierdurch gelangt ein sich auf der ersten schwenkbaren Gleitschiene 8b befindliches zweites Werkzeugteil 6 in eine Position, in der sich die in Figur 5 rechte Ausnehmung der Schiene 9d unterhalb der Hervorstehung 6b des betreffenden zweiten Werkzeugteils 6 befindet. Die in Figur 5 linke Ausnehmung der Schiene 9d befindet sich dann unterhalb der Hervorstehung 6b des sich in der Kühlstation 2 befindlichen zweiten Werkzeugteils 6.

Durch Betätigung des Kurzhubzylinders 9d wird die Schiene 9d nach oben verstellt, sodass die Hervorstehungen 6b der beiden betreffenden zweiten Werkzeugteile 6 in die Ausnehmungen der Schiene 9d gelangen.

Nachdem in der Station 3 der Anguss 7a ausgestoßen wurde, wird die zweite schwenkbare Gleitschiene 9d derart verschwenkt, dass sie mit der dritten Gleitschiene 10a fluchtet. Wenn dies der Fall ist, wird das sich auf der zweiten schwenkbaren Gleitschiene 9b befindliche zweite Werkzeugteil 6 von der zweiten schwenkbaren Gleitschiene 9b auf die dritte Gleitschiene 10a geschoben und die zweite schwenkbare Gleitschiene 9b wieder in ihre Ausgangsstellung zurückgeschwenkt.

Nachdem dies der Fall ist und die Kühlung des betreffenden zweiten Werkzeugteils 6 in der Kühlstation 2 erfolgt ist, wird der zweite Pneumatikzylinder 9 derart betätigt, dass das sich in der Kühlstation 2 befindliche zweite Werkzeugteil 6 in die Station 3 verschoben wird, in der der Anguss 7a ausgestoßen wird, sowie das sich auf der ersten schwenkbaren Gleitschiene 8b befindliche zweite Werkzeugteil 6 in die Kühlstation 2 verschoben wird. Daraufhin werden die in den Stationen 2 und 3 vorzunehmenden Tätigkeiten erneut durchgeführt und der vorstehend beschriebene Vorgang wiederholt sich.

Der vorstehend beschriebene Transport wird in nahezu unveränderter Weise auch auf der ersten Gleitschiene 8a und der vierten Gleitschiene 11a durchgeführt. Der Transport des zweiten Werkzeugteils 6 auf der dritten Gleitschiene 10a unterscheidet sich von dem zuvor beschriebenen Transport lediglich dadurch, dass jeweils nur ein zweites Werkzeugteil 6 transportiert wird. Das heißt, ein der Schiene 9d entsprechendes Element wird beim Transport des zweiten Werkzeugteils 6 auf der dritten Gleitschiene 10 nicht benötigt. Der Mitnehmer 10e des dritten Pneumatikzylinders 10 steht nach entsprechender Verstellung direkt mit der Hervorstehung 6b des betreffenden zweiten Werkzeugteils 6 in Wirkverbindung. Hierdurch lässt sich durch Betätigung des dritten Pneumatikzylinders 10 ein auf der zweiten schwenkbaren Gleitschiene 9b angeordnetes zweites Werkzeugteil 6 über die dritte Gleitschiene 9a direkt auf die dritte schwenkbare Gleitschiene 10b verschieben.

Durch die in Figur 1 dargestellte Anordnung der Gleitschienen 8a, 8b, 9a, 9b, 10a, 10b, 11a, 11b wird ein geschlossener Umlauf gebildet, auf dem zweite Werkzeugteile 6 durchgehend transportiert werden können. Sehr vorteilhaft hierbei ist, dass die wesentlichsten Teile der Spritzgießmaschine 100, wie beispielsweise die Schließeinheit, innerhalb des geschlossenen Umlaufs angeordnet sein können. Hierdurch wird ein sehr kompakter Aufbau erreicht, der nur wenig Platz benötigt.

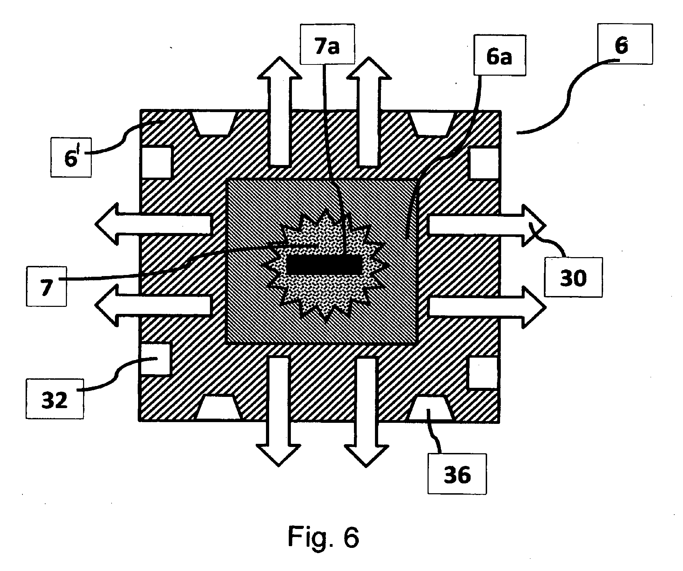

In Fig. 6 ist erkennbar, dass zweite, für die kalte Seite des Formwerkzeugs vorgesehene, bewegliche zweite Werkzeugteil 6 einen etwa quaderförmigen Hauptkörper 6' aus einem ersten Werkstoff aufweist. In dem Hauptkörper 6' ist ein Formnest 6a aus einem zweiten Werkstoff angeordnet, das einen Formhöhlungsabschnitt mit der Kavität 7b zum Formen des Spritzlings 7 an der Spritzstation 1 aufweist.

Das zweite Werkzeugteil 6 hat einen Wärmeableitbereich aus einem gut wärmeleitfähigen Werkstoff. Der Wärmeableitbereich hat eine Oberfläche, die der Kühlstation 2 zugewandt ist, wenn das zweite Werkzeugteil 6 an der Kühlstation 2 positioniert ist. Dabei steht die Oberfläche in direktem thermischen Kontakt mit einem Kühlbereich der Kühlstation 2. Somit wird Wäre von dem Formnest 6a und dem Formhöhlungsabschnitt zu dem Kühlbereich abgeführt.

Das in Fig. 6 gezeigte zweite Werkzeugteil 6 hat außerdem mehrere als mechanische Klemme ausgebildete Verbindungsteile 36, welches mit einem dazu passenden, in der Zeichnung nicht näher dargestellten Verbindungsteil der Spritzstation lösbar verbindbar ist.

Das zweite Werkzeugteil 6 hat ferner einen Positionierabschnitt 32, mittels dem das Werkzeugteil für die kalte Seite relativ zu der Spritzstation 1 und der Kühlstation 2 positionierbar ist. Wie in Fig. 1 erkennbar ist, reift an dem Positionierabschnitt der Pneumatikzylinder 8 an.

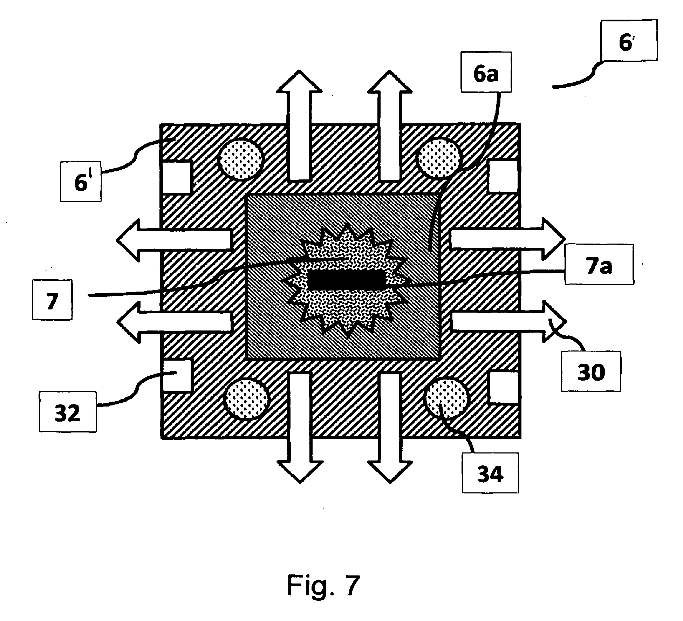

Bei dem in Fig. 7 gezeigten zweiten Werkzeugteil 6 sind die Verbindungsteile 34 als magnetische Spannvorrichtung ausgestaltet. Im Übrigen entspricht der Aufbau dieses Werkzeugteils 6 dem in Fig. 6.

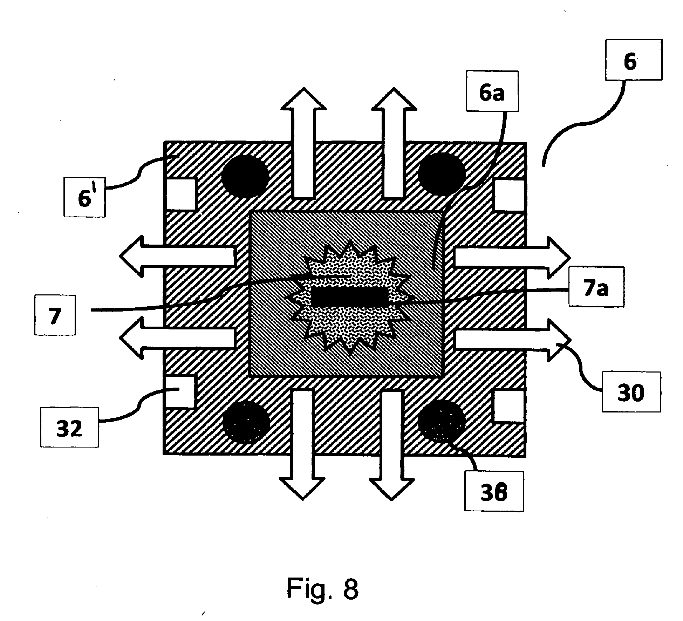

Wie in Fig. 8 erkennbar ist, können die Verbindungsteile 38 auch als Vakuumspannvorrichtung ausgestaltet sein.

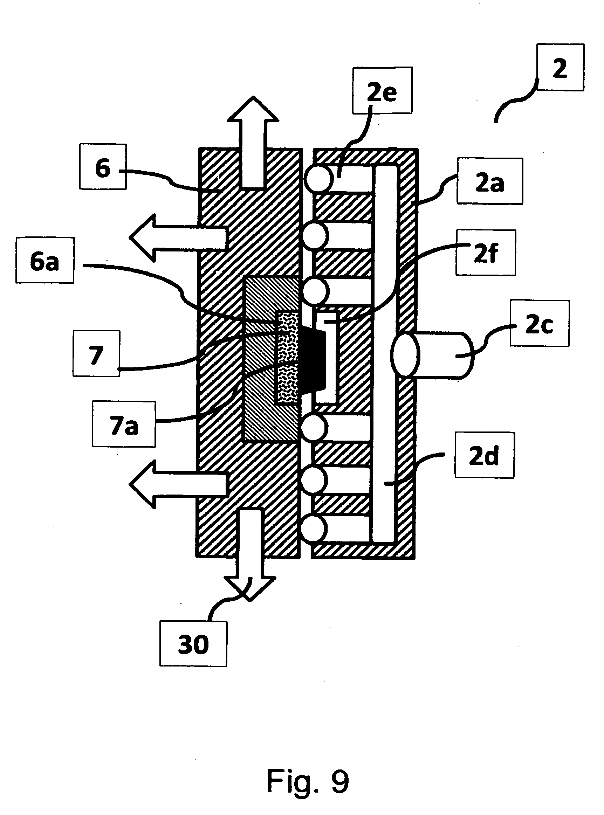

In Fig. 9 ist erkennbar, dass die Kühlstation 2 im Kühlbereich eine Kühlplatte 2a mit Gasauslassöffnungen 2e aufweisen kann, aus denen Kühlluft direkt auf den Wärmeableitbereich des zweiten Werkzeugteils 6 ausströmbar ist. Die Gasauslassöffnungen 2e sind über Kanäle 2d mit einem Einlass 2c für die Kühlluft verbunden. Zum Abschirmen des Spritzlings 7 und des Angusses 7 von der Kühlluft weist die Kühlplatte 2a eine der Kavität 7b zugewandte Innenhöhlung 2f auf, in welche der Anguss 7 eingreift.

## Patentansprüche

1. Spritzgießmaschine (100) zum Herstellen von Spritzlingen (7), mit einer Spritzstation (1), in der Schmelze in eine dem Spritzling (7) entsprechende Kavität (7b) eines Formwerkzeugs (6, 28) einbringbar ist, das zumindest ein erstes Werkzeugteil (28) und ein zweites Werkzeugteil (6) aufweist, welche in eine Offen- und eine Schließstellung bringbar sind, wobei das erste Werkzeugteil (28) wenigstens einen Angusskanal aufweist und die Kavität zumindest teilweise in dem zweiten Werkzeugteil (6) angeordnet ist, mit einer Kühlstation (2), welche außerhalb der Spritzstation (1) angeordnet ist und einer Entnahmestation (4), welche außerhalb der Spritzstation (1) angeordnet ist, zur Entnahme der Spritzlinge (7) sowie einer Transporteinrichtung, die wenigstens eine die Stationen (1, 2, 4) verbindende Transportstrecke (8a, 8b, 9a, 9b, 10a, 10b, 11 a, 11 b) aufweist, auf welcher das zweite Werkzeugteil (6) gegebenenfalls mit einem Spritzling (7) in der Kavität (7b) von einer Station (1, 2, 4) zu einer anderen Station (2, 4, 1) bewegbar ist, wobei
das erste Werkzeugteil (28) ortsfest an einer Maschinendüse (29) angeordnet und das zweite Werkzeugteil (6) getrennt von dem ersten Werkzeugteil (28) entlang der Transportstrecke (8a, 8b, 9a, 9b, 10a, 10b, 11 a, 11 b) bewegbar ist, wobei das zweite Werkzeugteil (6) einen aus einem gut wärmeleitfähigen Werkstoff bestehenden Wärmeableitbereich aufweist, und wobei der Wärmeableitbereich thermisch mit einem Kühlbereich der Kühlstation (2) in Kontakt bringbar ist, derart, dass der Kühlbereich von dem Spritzling (7) beabstandet ist, **dadurch gekennzeichnet, dass**
die Spritzstation (1) ein Zentrierelement (21) zum Zentrieren des in die Spritzstation (1) eingeführten zweiten Werkzeugteils (6) aufweist und das Formwerkzeug (6, 28) nach Beendigung des Spritzgießprozesses, noch bevor die Schmelze vollständig erstarrt ist, öffenbar und nur das zweite Werkzeugteil (6) zusammen mit dem darin befindlichen Spritzling (7) entlang der Transportstrecke (8a, 8b, 9a, 9b) zur Kühlstation (2) transportierbar ist, wobei die Transporteinrichtung zum Bewegen des zweiten Werkzeugteils (6) ferner
- Linearförderer (8, 9, 10, 11) aufweist, welche jeweils in einem Winkel von 90 Grad zueinander angeordnet und an ihren Enden mittels Drehantrieben (8b, 8c, 9b, 9c, 10b, 10c, 11 b, 11 c) miteinander verbunden sind, sowie
- Gleitschienen (8a, 9a, 10a, 11 a) aufweist, auf welchen das zweite Werkzeugteil (6) seitlich verschiebbar angeordnet sind, wobei an den Gleitschienen (8a, 9a, 10a, 11a) Führungselemente (23) angeordnet sind, welche in entsprechend ausgebildete Führungsnuten an dem zweiten Werkzeugteil (6) eingreifen.

2. Spritzgießmaschine (100) nach Anspruch 1,
**dadurch gekennzeichnet,**
**dass** die erste Gleitschiene (8a) eine Lagernut (24a) aufweist, an deren Wandungen an dem zweiten Werkzeugteil (6) befestigte, hintereinander angeordnete Rollen (24, 25) anliegen.

3. Spritzgießmaschine (100) nach einem der vorhergehenden Ansprüche,
**dadurch gekennzeichnet,**
**dass** die Transporteinrichtung zum Bewegen der zweiten Werkzeugteile (6) ferner Schienen (8d, 9d, 10d, 11d) mit Ausnehmungen aufweist, die so ausgebildet sind, dass in diese zum seitlichen Verschieben der zweiten Werkzeugteile (6) daran angeordnete Hervorstehungen (6b) eingreifen können, wobei
die seitliche Verschiebung des zweiten Werkzeugteils (6) mittels kolbenstangenloser Pneumatikzylinder (8, 9, 10, 11) erfolgt, welche Mitnehmer aufweisen, an denen ein Kurzhubzylinder (9e) angeordnet ist, dessen Kolbenstange mit einer Schiene (9d) verbunden ist.

4. Spritzgießmaschine (100) nach einem der vorhergehenden Ansprüche,
**dadurch gekennzeichnet,**
**dass** der Kühlbereich einen quer zur Transportrichtung des zweiten Werkzeugteils (6) auf den Wärmeableitbereich zu- und von diesem weg bewegbaren Kühlkörper (2a) aufweist, der zum direkten Kühlen des zweiten Werkzeugteils (6) thermisch mit dem Wärmeableitbereich in Kontakt bringbar ist.

5. Spritzgießmaschine (100) nach Anspruch 4,
**dadurch gekennzeichnet,**
**dass** der Kühlkörper (2a) aktiv gekühlt ist.

6. Spritzgießmaschine (100) nach Anspruch 5,
**dadurch gekennzeichnet;**
**dass** der Kühlkörper (2a) mindestens einen Kühlmittelkanal aufweist, der von einem Kühlfluid durchströmbar ist.

7. Spritzgießmaschine (100) nach einem der Ansprüche 4 bis 6,
**dadurch gekennzeichnet,**
**dass** sie eine Anpressvorrichtung aufweist, mittels welcher der Kühlkörper (2a) flächig an das zweite Werkzeugteil (6) anpressbar ist.

8. Spritzgießmaschine (100) nach einem der vorhergehenden Ansprüche,
**dadurch gekennzeichnet,**
**dass** die Kühlstation (2) im Kühlbereich mindestens eine Gasauslassöffnung (2e) aufweist, aus der ein Kühlgas direkt auf den Wärmeableitbereich ausströmbar ist.

9. Spritzgießmaschine (100) nach einem der vorhergehenden Ansprüche,
**dadurch gekennzeichnet,**
**dass** als weitere Station eine Trennstation (3) zum Abtrennen und Entfernen des Angusses (7a) an der Transportstrecke (8a, 8b, 9a, 9b, 10a, 10b, 11 a, 11 b) angeordnet ist.

10. Spritzgießmaschine (100) nach einem der vorhergehenden Ansprüche,
**dadurch gekennzeichnet,**
**dass** als weitere Station eine Heizstation (5) an der Transportstrecke (8a, 8b, 9a, 9b, 10a, 10b, 11a, 11b) angeordnet ist.

11. Spritzgießmaschine (100) nach einem der vorhergehenden Ansprüche,
**dadurch gekennzeichnet,**
**dass** die Transportstrecke (8a, 8b, 9a, 9b, 10a, 10b, 11 a, 11 b) einen geschlossenen Umlauf bildet.

12. Spritzgießmaschine (100) nach Anspruch 11,
**dadurch gekennzeichnet, dass**
eine Schließeinheit innerhalb des geschlossenen Umlaufs angeordnet ist.

13. System aufweisend die Spritzgießmaschine (100) nach einem der Ansprüche 1 bis 12 und wenigstens ein Werkzeugteil (6) für die kalte Seite eines Formwerkzeugs (6, 28) der Spritzgießmaschine (100), welches Werkzeugteil (6) entlang einer Führung (8a, 9a, 10a, 11 a) von einer Spritzstation (1), an der das Werkzeugteil (6) zum Begrenzen einer Kavität (7b) mit einem dazu passenden, stationären Werkzeugteil (28) für die warme Seite des Formwerkzeugs (6, 28) verbindbar ist, zu mindestens einer von der Spritzstation (1) beabstandeten Kühlstation (2) transportierbar ist, wobei das Werkzeugteil (6) für die kalte Seite folgendes aufweist:
• einen Hauptkörper (6') aus einem ersten Werkstoff,
• ein Formnest (6a) aus einem zweiten Werkstoff,
• einen Formhöhlungsabschnitt mit einer Kavität (7b) zum Formen eines Spritzlings (7) an der Spritzstation (1),
• einen Wärmeableitbereich aus einem gut wärmeleitfähigen Werkstoff, welcher Wärmeableitbereich dazu geeignet ist, mit der Kühlstation (2) zusammen zu wirken, wobei der Wärmeableitbereich eine in Gebrauchsstellung der Kühlstation (2) zugewandte Oberfläche aufweist, die dazu geeignet ist, bei direktem thermischen Kontakt mit einem Kühlbereich der Kühlstation (2) Wärme vom Formnest (6a) und dem Formhöhlungsabschnitt zu dem Kühlbereich abzuleiten, wobei der Wärmeableitbereich thermisch mit einem Kühlbereich der Kühlstation (2) in Kontakt bringbar ist, derart, dass der Kühlbereich von dem Spritzling (7) beabstandet ist,
• ein Verbindungsteil (34, 36, 38), welches mit einem dazu passenden Verbindungsteil der Spritzstation lösbar verbindbar ist, um das Werkzeugteil für die kalte Seite mit dem Werkzeugteil für die warme Seite lösbar zu verbinden, derart, dass das den Spritzling enthaltende Werkzeugteil für die kalte Seite zu der Kühlstation (2) transportierbar ist,
und
• einen Positionierabschnitt, mittels dem das Werkzeugteil für die kalte Seite relativ zu der Spritzstation (1) und der Kühlstation (2) positionierbar ist.

14. System nach Anspruch 13, **dadurch gekennzeichnet, dass** das Verbindungsteil (34, 36, 38) ein mechanisches Verbindungsteil (34) ist, oder mindestens einen Permanentmagnet und/ oder Elektromagnet aufweist oder derart ausgestaltet ist, dass es mit einem solchen magnetisch zusammenwirken kann, oder dass das Verbindungsteil (38) Mittel zum Erzeugen eines Unterdrucks aufweist.

## Claims

1. An injection molding machine (100) for the manufacture of injection molded parts (7) comprising an injection station (1) for charging melt in a cavity (7b) of a mold tool (6, 28) corresponding to the injection molded part (7), the mold has at least a first mold part (28) and a second mold part (6), which can be brought into an open and a closed position, wherein the first mold part (28) has at least one gate runner and the cavity is arranged at least partially in the second mold part (6), the injection molding machine further having a cooling station (2) which is located outside the injection station (1) and an ejection station (4) which is located outside the injection station (1) for demolding the molded parts (7) and a transportation means comprising at least one transportation track (8a, 8b, 9a, 9b, 10a, 10b, 11a, 11b) connecting the stations (1, 2, 4) on the transportation track on which the second mold part (6) and optionally an injection molded part (7) located in the cavity (7b) are movable from one station (1, 2, 4) to another station (2, 4, 1), wherein
the first mold part (28) is stationarily arranged at a machine nozzle (29), and the second mold part (6), separated from the first mold part (28), is movable along the transportation track (8a, 8b, 9a, 9b, 10a, 10b, 11 a, 11 b), wherein the second mold part (6) has a heat dissipation area comprising a good heat conducting material and wherein the heat dissipation area is thermally contactable with a cooling area of the cooling station (2) such that the cooling area is distant from the injection molded part (7), **characterized in that** the injection station (1) comprises a centering element (21) for centering the second mold part (6) which is introduced in the injection station (1) and the mold (6, 28) is openable after completion of the injection molding process but before the melt has completely solidified, and only the second mold part (6) together with the molded part (7) located inside it is transportable on the transportation track (8a, 8b, 9a, 9b) to the cooling station (2), whereas the transportation means for moving the second mold part (6) further has
- linear conveyors (8, 9, 10, 11) arranged at an angle of 90 degrees to each other and connected to each other at their ends by means of rotational drives (8b, 8c, 9b, 9c, 10b, 10c, 11b, 11c), and
- slide rails (8a, 9a, 10a, 11 a) on which the second mold part (6) is arranged in a laterally movable way, whereas guiding elements (23) are arranged at the slide rails (8a, 9a, 10a, 11 a) which engage in corresponding guiding grooves at the second mold part (6).

2. An injection molding machine (100) according to claim 1,
**characterized in that**,
the first slide rail (8a) comprises a supporting channel (24a) against which walls rollers (24, 25) lie that are arranged in a row and are attached to the second mold part (6).

3. An injection molding machine (100) according to one of the preceding claims,
**characterized in that**,
for moving the second mold parts (6) laterally, the transport means further comprises rails (8d, 9d, 10d, 11 d) with recesses into which projections (6b) are engageable, which are arranged on the second mold parts (6), whereas the lateral movement of the second mold part (6) is effected by means of rodless pneumatic cylinders (8, 9, 10, 11) which comprise drives, at which a short stroke cylinder (9e) is arranged, which rod is connected to a rail (9d).

4. An injection molding machine (100) according to one of the preceding claims,
**characterized in that**,
the cooling area comprises a cooling element (2a) movable transversely to the transportation direction of the mold part (6) to and from the heat dissipation area, wherein the cooling element (2a) can be brought in thermal contact with the heat dissipation area for direct cooling of the second mold part (6).

5. An injection molding machine (100) according to claim 4,
**characterized in that**,
the cooling element (2a) is actively cooled.

6. An injection molding machine (100) according to claim 5,
**characterized in that**,
the cooling element (2a) has at least one coolant channel through which a coolant can flow.

7. An injection molding machine (100) according to one of claims 4 to 6,
**characterized in that**,
the injection molding machine comprises a pressing device for planarly pressing the cooling element (2a) to the second mold part (6).

8. An injection molding machine (100) according to one of the preceding claims,
**characterized in that**,
the cooling station (2) comprises at least one gas outlet opening (2e) in the cooling area, from which a cooling gas can flow out directly to the heat dissipation area.

9. An injection molding machine (100) according to one of the preceding claims,
**characterized in that**,
as a further station, a separating station (3) for separating and removing the sprue (7a) is arranged on the transportation track (8a, 8b, 9a, 9b, 10a, 10b, 11a, 11b).

10. An injection molding machine (100) according to one of the preceding claims,
**characterized in that**,
as a further station a heating station (5) is arranged on the transportation track (8a, 8b, 9a, 9b, 10a, 10b, 11 a, 11 b).

11. An injection molding machine (100) according to one of the preceding claims,
**characterized in that**,
the transportation track (8a, 8b, 9a, 9b, 10a, 10b, 11 a, 11 b) provides a closed circuit.

12. An injection molding machine (100) according to claim 11,
**characterized in that**,
a clamping unit is located within the closed circuit.

13. System comprising the injection molding machine (100) according to any one of claims 1 to 12 and at least one mold part (6) for the cold side of a mold tool (6, 28) of the injection molding machine (100) wherein the mold part (6) is transportable along a guide (8a, 9a, 10a, 11 a) from an injection station (1) on which the mold part (6) can be connected to a corresponding stationary mold part (28) for the hot side of the mold tool (6, 28) to define a cavity (7b) and to at least one cooling station (2) which is distant from the injection station (1), wherein the mold part (6) for the cold side comprises:
• a main body (6') made from a first material,
• a cavity module (6a) made from a second material,
• a mold space with a cavity (7b) for forming a molded part (7) at the injection station (1),
• a heat dissipation area made of a good heat conducting material, said heat dissipation area being suited to interact with the cooling station (2), wherein the heat dissipation area comprises a surface that faces the cooling station (2) when in its operating position and is suited, when in direct thermal contact with a cooling area of the cooling station (2), to dissipate heat from the cavity module (6a) and the mold space to the cooling area, wherein the heat dissipation area is thermally contactable with a cooling area of the cooling station (2) such that the cooling area is distant from the injection molded part (7)
• a connecting part (34, 36, 38) which is detachably connectable to a corresponding connecting part of the injection station (1) for detachably connecting the mold part (6) for the cold side with the mold part (28) for the hot side such that the mold part (6) for the cold side containing the molded part (7) is transportable to the cooling station (2), and
• a positioning area by means of which the mold part (6) for the cold side is positionable relative to the injection station (1) and the cooling station (2).

14. System according to claim 13, **characterized in that**,
the connecting part (34, 36, 38) is a mechanical connecting part (34) or the connecting part (34, 36, 38) has at least one permanent magnet and / or electromagnet, or is designed such that it can interact magnetically with such a permanent magnet and / or electromagnet or the connecting part (38) comprises means for generating a negative pressure.

## Revendications

1. Machine de moulage par injection (100) servant à fabriquer des ébauches injectées (7), comprenant un poste d'injection (1), dans lequel une matière fondue peut être introduite dans une cavité (7b), correspondant à l'ébauche injectée (7), d'un outil de moulage (6, 28), qui présente au moins une première partie d'outil (28) et une deuxième partie d'outil (6), qui peuvent être amenées dans une position ouverte et dans une position fermée, sachant que la première partie d'outil (28) présente au moins un canal de culot d'injection et que la cavité est disposée au moins en partie dans la deuxième partie d'outil (6), comprenant un poste de refroidissement (2), qui est disposé à l'extérieur du poste d'injection (1), et comprenant un poste de retrait (4), qui est disposé à l'extérieur du poste d'injection (1), servant à retirer les ébauches injectées (7) ainsi que comprenant un dispositif de transport, qui présente au moins un trajet de transport (8a, 8b, 9a, 9b, 10a, 10b, 11a, 11b) reliant les postes (1, 2, 4), sur lequel la deuxième partie d'outil (6) éventuellement avec une ébauche injectée (7) dans la cavité (7b) peut être déplacée depuis un poste (1, 2, 4) à un autre poste (2, 4, 1), sachant
que la première partie d'outil (28) est disposée de manière stationnaire au niveau d'une buse de machine (29) et que la deuxième partie d'outil (6) peut être déplacée le long du trajet de transport (8a, 8b, 9a, 9b, 10a, 10b, 11a, 11b) séparément de la première partie d'outil (28), sachant que la deuxième partie d'outil (6) présente une zone de dissipation de chaleur constituée d'un matériau correctement thermoconducteur, et sachant que la zone de dissipation de chaleur peut être amenée en contact thermique avec une zone de refroidissement du poste de refroidissement (2) de telle manière que la zone de refroidissement est tenue à distance de l'ébauche injectée (7), **caractérisée en ce**
**que** le poste d'injection (1) présente un élément de centrage (21) servant à centrer la deuxième partie d'outil (6) introduite dans le poste d'injection (1), en ce que l'outil de moulage (6, 28) peut être ouvert à la fin du processus de moulage par injection, encore avant que la matière fondue ne soit totalement solidifiée, et en ce que seulement la deuxième partie d'outil (6) conjointement avec l'ébauche injectée (7) se trouvant dans cette dernière peut être transportée le long du trajet de transport (8a, 8b, 9a, 9b) en direction du poste de refroidissement (2), sachant que le dispositif de transport servant à déplacer la deuxième partie d'outil (6) présente en outre
- des convoyeurs linéaires (8, 9, 10, 11), qui sont disposés respectivement selon un angle de 90 degrés les uns par rapport aux autres et qui sont reliés les uns aux autres au niveau de leurs extrémités au moyen d'entraînements en rotation (8b, 8c, 9b, 9c, 10b, 10c, 11b, 11c), ainsi que
- des rails coulissants (8a, 8a, 10a, 11a), sur lesquels la deuxième partie d'outil (6) est disposée de manière à pouvoir être déplacée par un coulissement latéral, sachant que sont disposés, au niveau des rails coulissants (8a, 9a, 10a, 11a), des éléments de guidage (23), qui viennent en prise au niveau de la deuxième partie d'outil (6) avec des rainures de guidage réalisées de manière correspondante.

2. Machine de moulage par injection (100) selon la revendication 1,
**caractérisée en ce**
**que** le premier rail coulissant (8a) présente une rainure de support (24a), au niveau des cloisons de laquelle reposent des galets (24, 25) fixés au niveau de la deuxième partie d'outil (6), disposés les uns derrière les autres.

3. Machine de moulage par injection (100) selon l'une quelconque des revendications précédentes,
**caractérisée en ce**
**que** le dispositif de transport servant à déplacer les deuxièmes parties d'outil (6) présente en outre des rails (8d, 9d, 10d, 11d) pourvus d'évidements, qui sont réalisés de telle sorte que des parties faisait saillie (6b) disposées au niveau des deuxièmes parties d'outil (6) peuvent venir en prise avec lesdits évidements aux fins du déplacement par coulissement latéral des deuxièmes parties d'outil, sachant
**que** le déplacement par coulissement latéral de la deuxième partie d'outil (6) est effectué au moyen de vérins pneumatiques (8, 9, 10, 11) dépourvus de tiges de piston, lesquels présentent des entraîneurs, au niveau desquels est disposé un vérin à course courte (9e), dont la tige de piston est reliée à un rail (9d).

4. Machine de moulage par injection (100) selon l'une quelconque des revendications précédentes,
**caractérisée en ce**
**que** la zone de refroidissement présente un corps de refroidissement (2a) pouvant être déplacé, de manière transversale par rapport à la direction de transport de la deuxième partie d'outil (6) sur la zone de dissipation de chaleur, en direction dudit chemin ou depuis ce dernier, lequel corps de refroidissement peut être amené en contact thermique avec la zone de dissipation de chaleur aux fins du refroidissement direct de la deuxième partie d'outil (6).

5. Machine de moulage par injection (100) selon la revendication 4,
**caractérisé en ce**
**que** le corps de refroidissement (2a) est refroidi de manière active.

6. Machine de moulage par injection (100) selon la revendication 5,
**caractérisée en ce**
**que** le corps de refroidissement (2a) présente au moins un canal de moyen de refroidissement, qui peut être parcouru par un fluide de refroidissement.

7. Machine de moulage par injection (100) selon l'une quelconque des revendications 4 à 6,
**caractérisée en ce**
**qu'**elle présente un dispositif de compression, au moyen duquel le corps de refroidissement (2a) peut être comprimé à plat contre la deuxième partie d'outil (6).

8. Machine de moulage par injection (100) selon l'une quelconque des revendications précédentes,
**caractérisée en ce**
**que** le poste de refroidissement (2) présente dans la zone de refroidissement au moins une ouverture de sortie de gaz (2e), de laquelle un flux de gaz de refroidissement peut être évacué directement sur la zone de dissipation de chaleur.

9. Machine de moulage par injection (100) selon l'une quelconque des revendications précédentes,
**caractérisée en ce**
**qu'**un poste de séparation (3) servant à séparer et à retirer le culot d'injection (7a) est disposé en tant que poste supplémentaire au niveau du trajet de transport (8a, 8b, 9a, 9b, 10a, 10b, 11a, 11b).

10. Machine de moulage par injection (100) selon l'une quelconque des revendications précédentes,
**caractérisée en ce**
**qu'**un poste de chauffage (5) est disposé, en tant que poste supplémentaire, au niveau du trajet de transport (8a, 8b, 9a, 9b, 10a, 10b, 11a, 11b).

11. Machine de moulage par injection (100) selon l'une quelconque des revendications précédentes,
**caractérisée en ce**
**que** le trajet de transport (8a, 8b, 9a, 9b, 10a, 10b, 11a, 11b) forme un circuit fermé.

12. Machine de moulage par injection (100) selon la revendication 11,
**caractérisé en ce**
**qu'**une unité de fermeture est disposée à l'intérieur du circuit fermé.

13. Système présentant la machine de moulage par injection (100) selon l'une quelconque des revendications 1 à 12 et au moins une partie d'outil (6) pour le côté froid d'un outil de moulage (6, 28) de la machine de moulage par injection (100), laquelle partie d'outil (6) peut être transportée le long d'un guidage (8a, 9a, 10a, 11a) depuis un poste d'injection (1), au niveau duquel la partie d'outil (6) peut être reliée, afin de délimiter une cavité (7b), à une partie d'outil (28) stationnaire, adaptée à la première partie d'outil, pour le côté chaud de l'outil de moulage (6, 28), en direction au moins d'un poste de refroidissement (2) tenu à distance du poste d'injection (1), sachant que la partie d'outil (6) pour le côté froid présente les éléments suivants :
- un corps principal (6') composé d'un premier matériau ;
- un nid de moulage (6a) composé d'un deuxième matériau,
- une section de creux de moulage pourvue d'une cavité (7b) servant à mouler une ébauche injectée (7) au niveau du poste d'injection (1),
- une zone de dissipation de chaleur composée d'un matériau correctement thermoconducteur, laquelle zone de dissipation de chaleur est adaptée pour coopérer avec le poste de refroidissement (2), sachant que la zone de dissipation de chaleur présente une surface tournée vers le poste de refroidissement (2) en position d'utilisation, laquelle est adaptée pour dissiper, dans le cas d'un contact thermique direct avec une zone de refroidissement du poste de refroidissement (2) de la chaleur, depuis le nid de moulage (6a) et la section de creux de moulage vers la zone de refroidissement, sachant que la zone de dissipation de chaleur peut être amenée en contact thermique avec une zone de refroidissement du poste de refroidissement (2) de telle manière que la zone de refroidissement est tenue à distance de l'ébauche injectée (7),
- une partie de liaison (34, 36, 38), qui peut être reliée de manière amovible à une partie de liaison adaptée du poste d'injection, afin de relier de manière amovible la partie d'outil pour le côté froid à la partie d'outil pour le côté de chaud de telle manière que la partie d'outil contenant l'ébauche injectée pour le côté froid peut être transportée en direction du poste de refroidissement (2), et
- une section de positionnement, au moyen de laquelle la partie d'outil pour le côté froid peut être positionnée par rapport au poste d'injection (1) et au poste de refroidissement (2).

14. Système selon la revendication 13, **caractérisé en ce que** la partie de liaison (34, 36, 38) est une partie de liaison (34) mécanique, ou présente au mois un aimant permanent et/ou un électroaimant ou est configurée de telle manière qu'elle peut coopérer avec une partie de liaison du type magnétique, ou **en ce que** la partie de liaison (38) présente des moyens servant à produire une dépression.
